# EUROPÄISCHE PATENTSCHRIFT

(11) **EP 3 238 526 B1**
(45) Veröffentlichungstag und Bekanntmachung des Hinweises auf die Patenterteilung: **28.11.2018**
(21) Anmeldenummer: 17159474.0
(22) Anmeldetag: 07.03.2017
(51) Int. Cl.: A01D 89/00, A01F 15/10, A01D 41/10, A01D 41/14

(54) **ERNTEMASCHINE MIT EINER ERNTEGUTAUFNAHMEVORRICHTUNG**
HARVESTING MACHINE WITH A PICK-UP DEVICE
MOISSONNEUSE COMPRENANT UN RAMASSEUR

(30) Priorität: 28.04.2016 DE 102016107861
(43) Veröffentlichungstag der Anmeldung: 01.11.2017
(73) Patentinhaber: Usines Claas France S.A.S, 57140 St. Rémy / Woippy (FR)
(72) Erfinder: Marion, Sébastien, 57550 Falck (FR); Anstotz, Arnaud, 67000 Strasbourg (FR)
(74) Vertreter: Budach, Steffen

(56) Entgegenhaltungen:
- EP-A1- 1 616 475
- EP-A1- 2 786 650
- WO-A1-2014/180848
- DE-U- 1 904 803

## Beschreibung

Die Erfindung betrifft eine Erntemaschine, insbesondere eine Ballenpresse oder einen Ladewagen, für landwirtschaftliches Erntegut gemäß dem Oberbegriff des Anspruchs 1.

Erntemaschinen wie landwirtschaftliche Ballenpressen oder Ladewagen dienen der Aufnahme und Weiterverarbeitung oder dem Transport von Erntegut, beispielsweise Halm- und/oder Blattgut in Form von Stroh, Heu oder Silage, welches auf einem Feld in Form eines Schwads abgelegt wurde. Zur Aufnahme des Erntegutes weist eine derartige Erntemaschine üblicherweise eine Aufnahmevorrichtung, eine sogenannte Pickup, auf, welche beispielsweise eine mit Zinken versehenen Aufsammeltrommel umfasst. Bei einer Rotation der Aufsammeltrommel kann das Erntegut durch die Zinken vom Boden aufgenommen und beispielsweise zu einem nachgeordneten Förderrotor und/oder Erntegutkanal transportiert werden. Da die Aufnahmevorrichtung und die Aufsammeltrommel üblicherweise eine deutlich größere Breite als der ein daran anschließender Förderrotor und/oder Erntegutkanal aufweisen, sind an den Aufnahmevorrichtungen oftmals parallel zu der Aufsammeltrommel angeordnete, drehbare Förderschnecken vorgesehen, welche ein Zusammenführen des aufgenommenen Erntegutes zur Mitte der Aufnahmevorrichtung hin bewirken. Durch die Förderschnecken kann auch, insbesondere quer zu einer Förderrichtung des Erntegutes, eine gleichmäßigere Verteilung des Erntegutes vor einer Zuführung zu dem Förderrotor und/oder Erntegutkanal verbessert werden. Dies ist besonders bei einer Erntemaschine wie einer Ballenpresse von Vorteil, da durch eine gleichmäßigere Verteilung des Erntegutes über eine Breite des Erntegutkanals die Qualität des Ballens verbessert werden kann.

Aus der WO 2014/180848 A1 ist eine Ballenpresse mit einer Aufnahmevorrichtung zur Aufnahme von Erntegut mittels einer Aufnahmetrommel bekannt. Die Aufnahmevorrichtung weist dabei oberhalb der Enden der Aufnahmetrommel jeweils einen Förderschneckenstummel auf, um einen Förderung des Erntegutes zur Mitte der Aufnahmevorrichtung hin zu unterstützen. Zudem ist benachbart zu der Aufnahmetrommel und im Wesentlichen parallel zu dieser eine Zuführwalze vorgesehen, welche endseitig Förderschneckengewinde aufweist, durch welche ebenfalls ein Zusammenführen des Erntegutes bewirkt werden soll. Die Zuführwalze weist in einem mittigen Abschnitt mehrerer Förderleisten auf, welche eine Förderung des Erntegutes zu einem Förderrotor und/oder einem Erntegutkanal hin ermöglicht. Eine Anpassung an unterschiedliches Erntegut kann durch manuelles anbringen von Vergrößerungsplatten an den Förderleisten erfolgen. Durch die Förderschnecken ist zwar eine Förderung des Erntegutes im Wesentlichen zur Mitte der Aufnahmevorrichtung und dadurch eine gleichmäßigere Verteilung möglich, jedoch ist eine Anpassung an unterschiedliches Erntegut und Erntebedingungen nur in begrenztem Umfang möglich und zudem aufgrund der manuellen Montage aufwändig.

Es ist daher eine Aufgabe der Erfindung, eine landwirtschaftliche Erntemaschine mit einer Aufnahmevorrichtung anzugeben, welche eine verbesserte Verteilung des Erntegutes vor einer Zuführung in den Erntegutkanal ermöglicht.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung sind in den Unteransprüchen und der Beschreibung angegeben.

Eine landwirtschaftliche Erntemaschine mit einer Aufnahmevorrichtung für landwirtschaftliches Erntegut, wobei die Aufnahmevorrichtung mindestens eine antreibbare Aufsammeltrommel zum Aufnehmen von Erntegut und mindestens ein antreibbares Förderorgan aufweist, wobei das Förderorgan radial außenseitig Förderelemente aufweist, um das Erntegut zu einem Förderrotor und/oder Erntegutkanal zu fördern. Gemäß der Erfindung weist das Förderorgan mindestens zwei Förderabschnitte auf, welche unabhängig voneinander drehbar und antreibbar ausgebildet sind. Das Förderorgan mit mindestens zwei unabhängigen Förderabschnitten gemäß der Erfindung ermöglicht eine unterschiedliche Ausgestaltung der jeweiligen Förderabschnitte zur getrennten und unterschiedlichen Beeinflussung der Förderung des Erntegutes. So kann ein Förderabschnitt eine Förderung des Erntegutes quer zur Längsrichtung der Erntemaschine bewirken und ein anderer Förderabschnitt eine Förderung in Längsrichtung. Dies hat den Vorteil, dass die gleichmäßige Verteilung des Erntegutes vor einer Zuführung zum Förderrotor und/oder Erntegutkanal verbessert werden kann. Zudem ist durch die unabhängig voneinander drehbaren und antreibbaren Förderabschnitte eine einfache Anpassung an unterschiedliches Erntegut und/oder unterschiedliche Erntebedingungen mit geringem Aufwand möglich, so dass die gleichmäßige Verteilung des Erntegutes auch bei unterschiedlichem Erntegut und/oder veränderten Erntebedingungen sichergestellt werden kann.

Vorteilhafterweise sind die mindestens zwei Förderabschnitte koaxial zueinander angeordnet. Dies ermöglicht eine bauraumsparende Anordnung der Förderabschnitte beispielsweise nebeneinander, wodurch unterschiedliche Fördereigenschaften der jeweiligen Förderabschnitte, wie eine Förderung quer zur Längsrichtung oder in Längsrichtung, kombinierbar sind.

In einer vorteilhaften Ausgestaltung der Erfindung weist das Förderorgan drei Förderabschnitte auf, wobei ein erster Förderabschnitt im Wesentlichen mittig des Förderorgans und/oder der Aufnahmevorrichtung angeordnet ist, und ein zweiter und dritter Förderabschnitt jeweils außenseitig des ersten Förderabschnittes angeordnet sind. Der zweite und dritte Förderabschnitt können das Erntegut dabei im Wesentlichen quer zur Längsrichtung zum ersten Förderabschnitt hin fördern, wobei der erste Förderabschnitt das Erntegut zu einem Förderrotor und/oder einem Erntegutkanal weiterfördern kann. Der große Vorteil ist hierbei, dass die Förderung des Erntegutes in Querrichtung unabhängig von der Förderung in Längsrichtung erfolgen kann, wodurch eine gleichmäßigere Verteilung des Erntegutes, insbesondere bei einem unregelmäßig ausgebildeten Schwad, erreicht werden kann.

In einer besonders vorteilhaften Weiterbildung weist der erste Förderabschnitt eine In einer besonders vorteilhaften Weiterbildung weist der erste Förderabschnitt eine jeweils endseitig, insbesondere in der Aufnahmevorrichtung, drehbar gelagerte Antriebswelle auf, wobei die äußeren, insbesondere zweiten und dritten, Förderabschnitte auf der Antriebswelle drehbar angeordnet sind. Dabei können mehrere Förderabschnitte an einer oder beiden Seiten des ersten Förderabschnittes drehbar angeordnet sein. Die drehbar angeordneten Förderabschnitte können dabei gemeinsam mit der Antriebswelle drehbar oder relativ zu der Antriebswelle drehbar sein. Dies hat den Vorteil, dass durch die koaxiale Anordnung auf der Antriebswelle des ersten Förderabschnittes sowohl eine zuverlässige Lagerung als auch ein Antrieb des ersten Förderabschnittes mit einer bauraumsparenden Lagerung mindestens des zweiten und dritten Förderabschnittes kombinierbar ist.

Vorteilhafterweise sind die äußeren Förderabschnitte, insbesondere der zweite und dritte Förderabschnitt, mit unterschiedlichen Drehzahlen und/oder in unterschiedliche Drehrichtungen antreibbar. Hierdurch können unterschiedliche Fördereigenschaften der einzelnen Förderabschnitte besser genutzt und aufeinander abgestimmt werden. Dies hat den Vorteil, dass auch bei einem unregelmäßig ausgebildeten Schwad und/oder einer außermittigen Aufnahme des Erntegutes eine gleichmäßige Verteilung des Erntegutes vor der Zuführung zu dem Förderrotor und/oder dem Erntegutkanal ermöglicht werden kann.

In einer vorteilhaften Ausgestaltung der Erfindung sind außenseitig angeordnete Förderabschnitte, insbesondere der zweite und dritte Förderabschnitt, über eine drehbare Verbindungswelle gemeinsam antreibbar. Über die, insbesondere außerhalb des Erntegutstromes angeordnete, Verbindungswelle können die äußeren, insbesondere endseitigen, Förderabschnitte, beispielsweise der zweite und dritte Förderabschnitt, mittels einer gemeinsamen Antriebseinheit angetrieben werden. Die Drehzahlen und Drehrichtungen der jeweiligen Förderabschnitte können dabei beispielsweise mittels eines Getriebes in einem festen oder variablen Verhältnis zueinander betreibbar sein.

In einer besonders vorteilhaften Ausgestaltung der Erfindung ist eine Drehzahl und/oder eine Drehrichtung eines Förderabschnittes jeweils in Abhängigkeit mindestens eines Maschinenparameters und/oder eines Betriebsparameters regelbar.
Durch die Berücksichtigung von Maschinenparametern und/oder Betriebsparametern kann die Förderung und/oder Verteilung des Erntegutes durch die einzelnen Förderabschnitte weiter verbessert werden. Vorteilhaft ist dabei, dass Veränderungen, beispielsweise an der Erntemaschine oder bei dem Erntegut, besser berücksichtigt werden können und so eine bessere, gleichmäßigere Verteilung des Erntegutes vor der weiteren Förderung ermöglicht werden kann.

Weiterhin ist in einer Ausgestaltung der Erfindung mindestens eine erste Antriebseinheit zum Antreiben des Förderorgans vorgesehen. Durch die mindestens eine Antriebseinheit können bestimmte oder alle Förderabschnitte, beispielsweise auch über eine Verbindungswelle, effizient angetrieben werden. Durch weitere Antriebseinheiten, beispielsweise eine zweite Antriebseinheit, können Förderabschnitte getrennt antreibbar ausgebildet werden, wodurch die Förderung und/oder Verteilung des Erntegutes weiter verbessert werden kann.

Gemäß einer weiteren vorteilhaften Ausgestaltung der Erfindung ist mindestens ein, insbesondere der erste, Förderabschnitt und/oder mindestens ein Förderelement austauschbar ausgebildet. Hierdurch können die Fördereigenschaften deines Förderabschnittes und/oder der Förderelemente verändert werden, wodurch diese vorteilhaft beispielsweise an unterschiedliche Erntegutarten und/oder Erntebedingungen angepasst werden können.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung. Es zeigen:
- Fig. 1: eine Ballenpresse in schematischer Seitenansicht mit einer Aufnahmevorrichtung gemäß der Erfindung;
- Fig. 2: eine detaillierte Darstellung der Aufnahmevorrichtung gemäß Fig. 1 in einer perspektivischen Ansicht;
- Fig. 3: eine schematische Ansicht einer Aufnahmevorrichtung mit einem ersten Förderabschnitt mit alternativ ausgebildeten Förderelementen; und
- Fig. 4: die Aufnahmevorrichtung aus Fig. 3 in einer perspektivischen Darstellung.

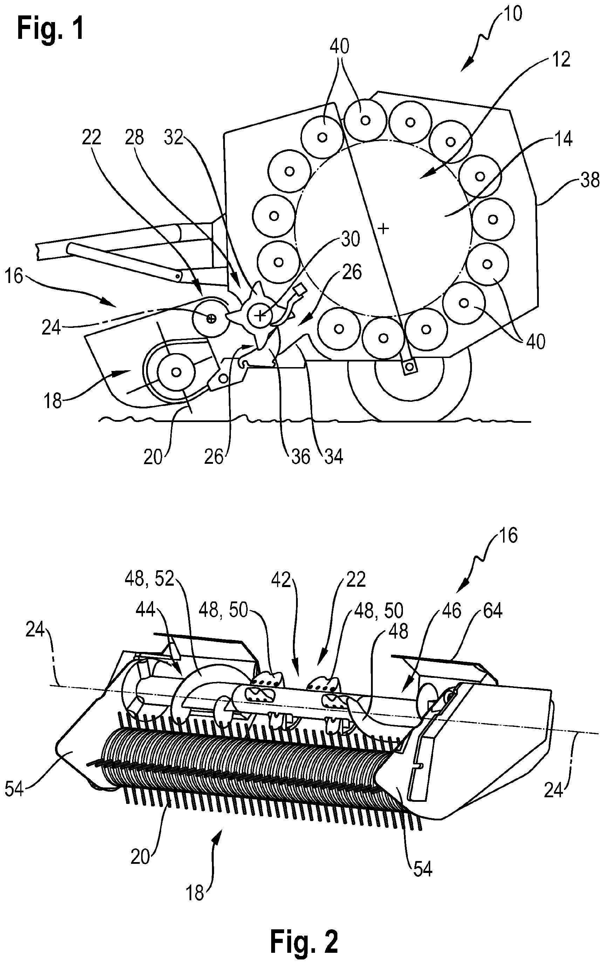

In Fig. 1 ist eine Erntemaschine in Form einer Ballenpresse in einer schematischen Seitenansicht dargestellt. Eine Erntemaschine 10 kann dabei in Form einer Presse, einer Ballenpresse wie einer Rundballen- oder Quaderballenpresse, eines Ladewagens, eines Feldhäckslers oder einer Mähdreschers ausgebildet sein.

Erntemaschinen in Form von Pressen, insbesondere Ballenpressen, oder Ladewagen werden dabei üblicherweise durch ein Zugfahrzeug wie einen Traktor (nicht dargestellt) gezogen und über eine mit diesem koppelbare Antriebswelle zum Antrieb der Förder- und Verarbeitungseinrichtungen mit Energie versorgt. Die dargestellte Ballenpresse 10 nimmt im Erntebetrieb auf dem Feldboden liegendes Erntegut, beispielsweise zum Schwad abgelegtes Stroh oder Gras, auf und verarbeitet dieses zu einem in einer Presskammer 12 gepressten Ballen 14, der nach Fertigstellung heckseitig aus der Ballenpresse 10 ausgeworfen wird.

Hierzu wird das Erntegut von der Ballenpresse 10 mittels einer Aufnahmevorrichtung 16, einer sogenannten Pickup, welche eine antreibbare Aufsammeltrommel 18 mit daran angeordneten Zinken 20 aufweist, vom Boden aufgenommen, um es den weiteren Förder- und Verarbeitungseinrichtungen der Ballenpresse 10 zuzuführen. Die Förderrichtung des Erntegutes von der Aufsammeltrommel 18 beispielsweise zu der Presskammer 12 entspricht im Wesentlichen einer Längsrichtung der Erntemaschine 10. Nach der Aufnahme durch die Aufsammeltrommel 18 wird das Erntegut zunächst einem der Aufsammeltrommel 18 nachgeordneten Förderorgan 22 zugeführt. Das Förderorgan 22 erstreckt sich dabei, ebenso wie die Aufsammeltrommel 18, im Wesentlichen über eine gesamte Breite der Aufnahmevorrichtung 16. Das Förderorgan 22 ist antreibbar um eine Drehachse 24 drehbar gelagert und kann das Erntegut von einer ursprünglichen Aufnahmebreite der Aufsammeltrommel 18 auf eine geringere Breite eines in Förderrichtung nachgelagerten Erntegutkanals 26 zusammenführen. Zudem kann das Förderorgan das Erntegut einem in Förderrichtung nachgelagert angeordneten, und insbesondere den Erntegutkanal 26 begrenzenden und in diesen hineinwirkenden, Förderrotor 28 zuführen. Der Förderrotor 28 ist um eine Rotorachse 30 drehbar gelagert und weist eine Vielzahl von zueinander beabstandet angeordneten, sternförmigen Rotorelementen 32 auf, welche in den Erntegutkanal 26 hineinwirken, um das Erntegut beispielsweise zur Verdichtung in Richtung der Presskammer 12 zu fördern.

Unmittelbar unterhalb des Förderrotors 28 erstreckt sich ein Gutleitelement 34 in Form eines gebogenen Bleches, welches den Erntegutkanal 26 über dessen gesamte Breite nach unten begrenzt. Unterhalb des Förderrotors 28 und des Gutleitelementes 34 ist eine Schneidvorrichtung 36 angeordnet, welche eine Vielzahl von Schneidelementen aufweist, die zum Zerkleinern des Erntegutes durch das Gutleitelement 34 zumindest teilweise in den Erntegutkanal 26 hineinschwenkbar ausgebildet sein können. Die Schneidvorrichtung 36 ist dabei im Wesentlichen presskammerseitig des Förderrotors 28 angeordnet. Das zerkleinerte Erntegut wird anschließend der Presskammer 12 zugeführt, welche innerhalb eines Gehäuses 38 der Ballenpresse 10 durch kreisförmig angeordnete und antreibbare Presswalzen 40 ausgebildet ist.

In Figur 2 ist die Aufnahmevorrichtung 16 gemäß der Erfindung in einer perspektivischen Ansicht dargestellt. Das Förderorgan 22 weist einen ersten Förderabschnitt 42 auf, welcher im Wesentlichen mittig der Aufnahmevorrichtung 16 angeordneten ist. Der erste Förderabschnitt 42 kann dabei im Wesentlichen eine Breite entsprechend des Erntegutkanals 26 und/oder Förderrotors 28 aufweisen. An den ersten Förderabschnitt 42 anschließend sind, jeweils an einem Ende, ein zweiter Förderabschnitt 44 und ein dritte Förderabschnitt 46 angeordnet. Der zweite Förderabschnitt 44 und der dritte Förderabschnitt 46 sind koaxial zu dem ersten Förderabschnitt 42 entlang der Drehachse 24 angeordnet und um diese drehbar gelagert. Denkbar ist auch eine Anordnung von weiteren Förderabschnitten entlang der Drehachse 24, welche drehbar oder drehfest zur Drehachse 24, beispielsweise als Leitelemente, ausgebildet sein können. Die Förderabschnitte 42, 44, 46 können unterschiedliche Fördereigenschaften aufweisen und/oder austauschbar ausgebildet sein. So kann der erste Förderabschnitt 42 für eine Förderung des Erntegutes entlang der Längsachse der Erntemaschine 10, insbesondere zu einem Förderrotor 28 hin, ausgebildet sein. Der zweite Förderabschnitt 44 und der dritte Förderabschnitt 46 hingegen können für eine Förderung des Erntegutes im Wesentlichen quer zu der Längsrichtung der Erntemaschine 10 ausgebildet sein, um das Erntegut von der Aufnahmebreite zusammenzuführen und dem ersten Förderabschnitt 42 zuzuführen.

Zur Förderung des Erntegutes weist ein Förderabschnitt 42, 44, 46 jeweils mindestens ein Förderelement 48 auf. Förderelemente 48 sind dabei radial außenseitig, insbesondere entlang dessen Umfang, an dem Förderabschnitt 42, 44, 46 verteilt angeordnet. Die Förderelemente 48 können lösbar mit dem Förderabschnitt 42, 44, 46 verbunden sein. Je nach Anzahl, Anordnung und Ausgestaltung der Förderelemente 48 ist die Fördereigenschaft eines Förderabschnittes 42, 44, 46 beeinflussbar. So kann der erste Förderabschnitt 42 eine Mehrzahl radial außenseitig und über den Umfang verteilte Förderelemente 48 aufweisen, welche im Wesentlichen in Form von ebenen Förderelementen 50 ausgebildet sind. Unter ebenen Förderelementen 50 sind im Rahmen der Erfindung, beispielsweise plattenförmig oder schaufelartig ausgebildete, Förderelemente 48, 50 zu verstehen, welche eine Fläche zum Fördern des Erntegutes aufweisen, die im Wesentlichen parallel zur Drehachse 24 ausgebildet ist, insbesondere um bei einer Rotation des Förderabschnittes 42, 44, 46 eine Förderung des Erntegute im Wesentlichen in Längsrichtung der Erntemaschine 10 zu bewirken. Die in Fig. 2 dargestellten Förderelemente 48, 50 des ersten Förderabschnittes 42 sind im Wesentlichen plattenförmig insbesondere mit einer radial außen ausgebildeten, endseitigen Abwinkelung ausgebildet.

Der zweite und dritte Förderabschnitt 44, 46, welche im Wesentlichen ein Förderung des Erntegutes quer zur Längsrichtung der Erntemaschine 10 bewirken sollen, können umfangsseitig jeweils ein oder mehrere radial außenseitig angeordnete Förderelemente 48 aufweisen, welche im Wesentlichen in Form von angewinkelten Förderelementen 52 ausgebildet sind. Unter angewinkelten Förderelementen 52 sind im Rahmen der Erfindung, beispielsweise spiralförmig oder paddelartig ausgebildete, Förderelemente 48, 52 zu verstehen, welche eine Fläche zum Fördern des Erntegutes aufweisen, die im Wesentlichen unter einem Winkel zur Drehachse 24 ausgebildet ist, insbesondere um bei einer Rotation des Förderabschnittes 42, 44, 46 eine Förderung des Erntegute im Wesentlichen quer zur Längsrichtung der Erntemaschine 10 zu bewirken. Angewinkelte Förderelemente 52 unterschiedlicher Förderabschnitte 44, 46 können dabei derart ausgebildet sein, dass bei gleicher Drehrichtung der Förderabschnitte 44, 46 das Erntegut jeweils zum ersten Förderabschnitt 42 bewegt wird. Spiralförmig ausgebildete Förderelemente 48, 52, beispielsweise des zweiten und dritten Förderabschnittes 44, 46, können dabei gegeneinander fördernd bzw. gegenläufig ausgebildet sein.

Die Aufsammeltrommel 18 und das Förderorgan 22 sind jeweils drehbar zwischen zwei Seitenelementen 54 angeordnet. Die Förderabschnitte 42, 44, 46 können dabei gemeinsam oder unabhängig voneinander drehbar und/oder antreibbar ausgebildet sein. Eine Drehzahl und/oder Drehrichtung der jeweiligen Förderabschnitte 42, 44, 46 kann dabei einzeln oder gruppiert steuer- und regelbar, beispielsweise durch eine Steuereinheit (nicht dargestellt) einstellbar sein. Eine Drehzahl und/oder eine Drehrichtung des ersten Förderabschnittes 42 kann dabei unabhängig von einer Drehzahl und/oder Drehrichtung des zweiten und/oder dritten Förderabschnittes 44, 46 einstellbar sein. Dies ermöglicht beispielsweise bei einem Schwad mit ungleichmäßigem Querschnitt, oder stark unterschiedlichen Querschnitten, eine unterschiedliche Drehzahl und damit Förderwirkung der beiden äußeren Förderabschnitte 44, 46 so einzustellen, dass eine möglichst gleichmäßige Verteilung des Erntegutes innerhalb der Aufnahmevorrichtung 15 erfolgen kann, so dass das durch den ersten Förderabschnitt 42 in den Erntegutkanal 26 und/oder Förderrotor 28 geförderte Erntegut möglichst gleichmäßig über den Querschnitt des Erntegutkanals 26 und/oder Förderrotor 28 verteilt ist.

Eine Drehzahl und/oder eine Drehrichtung eines oder mehrerer Förderabschnitte 42, 44, 46 ist dabei in Abhängigkeit mindestens eines Maschinenparameters Pm und/oder eines Betriebsparameters Pb einstellbar, um eine optimale Verteilung und Förderung des Erntegutes zu erreichen.

Ein Betriebsparameter ist dabei beispielsweise die Art und/oder eine spezifische Eigenschaft des zu verarbeitenden Erntegutes, eine Fördergeschwindigkeit des Erntegutes in dem Erntegutkanal, eine Schwadgeometrie, und/oder eine Fahrgeschwindigkeit der Erntemaschine, welche die Menge des aufgenommen Erntegutes beeinflusst. Ein Maschinenparameter kann zum Beispiel die Art und/oder Ausgestaltung der Förderabschnitte und/oder der Förderelemente, eine Drehzahl der Aufsammeltrommel 18, des Förderrotors 28 und/oder ein Befüllungsgrad der Presskammer 12, eine verfügbare Antriebsleistung für die Aufnahmevorrichtung 16 und/oder den Förderrotor 20 sein. Ebenso kann eine Einstellung der Drehzahl der Förderabschnitte 42, 44, 46 in Abhängigkeit der Drehrichtung der Förderabschnitte 42, 44, 46 als Maschinenparameter Pm genutzt werden.

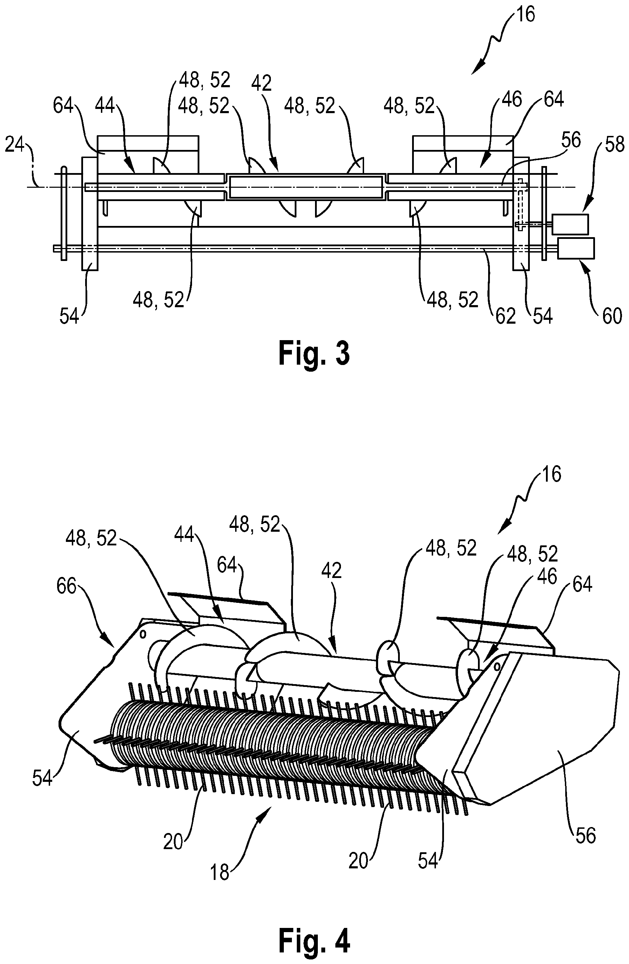

In Fig. 3 ist eine Aufnahmevorrichtung 14 in einer entlang der Drehachse 24 geschnittenen Frontansicht dargestellt. Der erste Förderabschnitt 42 weist eine Antriebswelle 56 auf, welche endseitig jeweils in einem Seitenelement 54 der Aufnahmevorrichtung 16 drehbar gelagert ist. Der erste Förderabschnitt 42 ist dabei einstückig mit der Antriebswelle 56 ausgebildet. Denkbar ist jedoch auch eine lösbare Verbindung des ersten Förderabschnittes 42 mit der Antriebswelle 56. Beiderseits des ersten Förderabschnittes 42 sind der zweite und der dritte Förderabschnitt 44, 46 drehbar auf der Antriebswelle 56 angeordnet, wobei der zweite und dritte Förderabschnitt 44, 46 auf der Antriebswelle 56 unabhängig drehbar angeordnet sind, und insbesondere hülsenförmig ausgebildet sind. Die Förderabschnitte 42, 44, 46 weisen jeweils Förderelemente 48, 52 auf, die spiralförmig ausgebildet sind. Die Förderelemente 48, 52 fördern im normalen Betrieb das aufgenommen Erntegut zum ersten Förderabschnitt 42 und zum Erntegutkanal (nicht dargestellt). Die Förderelemente 48, 52 des ersten Förderabschnittes 42 sind dabei derart ausgebildet, dass die spiralförmigen Förderelemente 48,52 im Normalbetrieb zur Mitte des ersten Förderabschnittes 42 hin fördern und sich dabei die Spiralen mittig treffen. Die Antriebswelle 56 ist über eine erste Antriebseinheit 58 antreibbar. Die zweite und dritte Förderabschnitt 44, 46 sind jeweils außenseitig durch eine zweite Antriebseinheit 60 über eine Verbindungswelle 62 antreibbar. Die zweite und dritte Förderabschnitt 44, 46 können über ein Getriebe (nicht dargestellt) mit unterschiedlichen Drehzahlen und/oder Drehrichtungen betreibbar sein. Als Antriebseinheiten 58, 60 können dabei beispielsweise hydraulische und/oder elektrische Antriebe eingesetzt werden. In Förderrichtung hinter dem zweiten und dritten Förderabschnitt 44, 46 ist jeweils eine Rückwand 64 angeordnet, welche rückseitig an der Aufnahmevorrichtung 16 zumindest teilweise eine Begrenzung bildet, durch welche die Querförderung der Erntegutes zum ersten Förderabschnitt 42 hin unterstützt werden kann.

In Fig. 4 ist die in Fig. 3 dargestellte Aufnahmevorrichtung 16 in einer perspektivischen Darstellung abgebildet. Hierbei ist besonders die alternative, schneckenförmige Ausgestaltung der angewinkelten Förderelemente 48, 52 dargestellt. Hierdurch kann neben einer Förderung in Längsrichtung eine weitere Zusammenführung des Erntegutes durch den ersten Förderabschnitt 42 bewirkt werden, beispielweise bei hohem Erntegutdurchsatz. Die Förderelemente 48, 52 des ersten Förderabschnittes 42 sind spiralförmig derart ausgebildet, dass diese gegenläufige Spiralen bilden, welche sich mittig des ersten Förderabschnittes 42 treffen, und insbesondere doppelspiralförmig ausgebildet sind. Hierdurch kann gleichmäßige Verteilung des Erntegutes entlang des ersten Förderabschnittes 42 erreicht werden. Die Seitenelemente 54 sind zumindest teilweise außenseitig mittels Seitenabdeckungen 66 abgedeckt, durch welche die Antriebseinheiten 58, 60 verdeckbar sind.

### Bezugszeichenliste

- 10: Erntemaschine
- 12: Presskammer
- 14: Ballen
- 16: Aufnahmevorrichtung
- 18: Aufsammeltrommel
- 20: Zinken
- 22: Förderorgan
- 24: Drehachse
- 26: Erntegutkanal
- 28: Förderrotor
- 30: Rotorachse
- 32: Rotorelement
- 34: Gutleitelement
- 36: Schneidvorrichtung
- 38: Gehäuse
- 40: Presswalze
- 42: Erster Förderabschnitt
- 44: Zweiter Förderabschnitt
- 46: Dritter Förderabschnitt
- 48: Förderelement
- 50: Ebenes Förderelement
- 52: Angewinkeltes Förderelement
- 54: Seitenelement
- 56: Antriebswelle
- 58: Erste Antriebseinheit
- 60: Zweite Antriebseinheit
- 62: Verbindungswelle
- 64: Rückwand
- 66: Seitenabdeckung
- Pm: Maschinenparameter
- Pb: Betriebsparameter

## Patentansprüche

1. Landwirtschaftliche Erntemaschine mit einer Aufnahmevorrichtung (16) für landwirtschaftliches Erntegut, wobei die Aufnahmevorrichtung (16) mindestens eine antreibbare Aufsammeltrommel (18) zum Aufnehmen von Erntegut und mindestens ein antreibbares Förderorgan (22) aufweist, wobei das Förderorgan (22) radial außenseitig Förderelemente (48, 50, 52) aufweist, um das Erntegut zu einem Förderrotor (28) und/oder einem Erntegutkanal (26) zu fördern, wobei das Förderorgan (22) mindestens zwei Förderabschnitte (42, 44, 46) aufweist,
**dadurch gekennzeichnet, dass** die Förderabschnitte (42, 44, 46) unabhängig voneinander drehbar und antreibbar ausgebildet sind.

2. Erntemaschine nach Anspruch 1, **dadurch gekennzeichnet, dass** die mindestens zwei Förderabschnitte (42, 44, 46) koaxial zueinander angeordnet sind.

3. Erntemaschine nach Anspruch 1 oder 2, **dadurch gekennzeichnet, dass** das Förderorgan (22) drei Förderabschnitte (42, 44, 46) aufweist, wobei ein erster Förderabschnitt (42) im Wesentlichen mittig des Förderorgans (22) und/oder der Aufnahmevorrichtung (16) angeordnet ist, und ein zweiter und dritter Förderabschnitt (44, 46) jeweils außenseitig des ersten Förderabschnittes (42) angeordnet sind.

4. Erntemaschine nach einem der vorherigen Ansprüche, **dadurch gekennzeichnet, dass** der erste Förderabschnitt (42) eine jeweils endseitig, insbesondere in der Aufnahmevorrichtung (16), drehbar gelagerte Antriebswelle (56) aufweist, wobei die äußeren, insbesondere zweiten und dritten, Förderabschnitte (44, 46) auf der Antriebswelle (56) drehbar angeordnet sind.

5. Erntemaschine nach einem der vorherigen Ansprüche, **dadurch gekennzeichnet, dass** die äußeren Förderabschnitte (44, 46), insbesondere der zweite und dritte Förderabschnitt (44, 46), mit unterschiedlichen Drehzahlen und/oder in unterschiedliche Drehrichtungen antreibbar sind.

6. Erntemaschine nach einem der vorherigen Ansprüche, **dadurch gekennzeichnet, dass** außenseitig angeordnete Förderabschnitte (44, 46), insbesondere der zweite und dritte Förderabschnitt (44, 46), über eine drehbare Verbindungswelle (62) gemeinsam antreibbar sind.

7. Erntemaschine nach einem der vorherigen Ansprüche, **dadurch gekennzeichnet, dass** eine Drehzahl und/oder eine Drehrichtung eines Förderabschnittes (42, 44, 46) jeweils in Abhängigkeit mindestens eines Maschinenparameters (Pm) und/oder eines Betriebsparameters (Pb) regelbar ist.

8. Erntemaschine nach einem der vorherigen Ansprüche, **dadurch gekennzeichnet, dass** mindestens eine erste Antriebseinheit (58) zum Antrieben des Förderorgans (22) vorgesehen ist.

9. Erntemaschine nach einem der vorherigen Ansprüche, **dadurch gekennzeichnet, dass** mindestens ein, insbesondere der erste, Förderabschnitt (42, 44, 46) und/oder mindestens ein Förderelement (48, 50, 52) austauschbar ausgebildet sind.

## Claims

1. An agricultural harvester comprising a pick-up device (16) for agricultural crop material, wherein the pick-up device (16) has at least one drivable collecting drum (18) for picking up crop material and at least one drivable conveyor member (22), wherein the conveyor member (22) has conveyor elements (48, 50, 52) radially on the outside in order to convey the crop material to a conveyor rotor (28) and/or a crop material passage (26), wherein the conveyor member (22) has at least two conveyor portions (42, 44, 46),
**characterised in that** the conveyor portions (42, 44, 46) are adapted to be drivable and rotatable independently of each other.

2. A harvester according to claim 1 **characterised in that** the at least two conveyor portions (42, 44, 46) are arranged coaxially relative to each other.

3. A harvester according to claim 1 or claim 2 **characterised in that** the conveyor member (22) has three conveyor portions (42, 44, 46), wherein a first conveyor portion (42) is arranged substantially centrally of the conveyor member (22) and/or the pick-up device (16) and a second and third conveyor portion (44, 46) are respectively arranged on the outside of the first conveyor portion (42).

4. A harvester according to one of the preceding claims **characterised in that** the first conveyor portion (42) has a drive shaft (56) mounted rotatably at the respective ends, in particular in the pick-up device (16), wherein the outer, in particular second and third, conveyor portions (44, 46) are arranged rotatably on the drive shaft (56).

5. A harvester according to one of the preceding claims **characterised in that** the outer conveyor portions (44, 46), in particular the second and third conveyor portions (44, 46) are drivable at different rotary speeds and/or in different rotary directions.

6. A harvester according to one of the preceding claims **characterised in that** conveyor portions (44, 46) arranged at the outside, in particular the second and third conveyor portions (44, 46) are drivable jointly by way of a rotatable connecting shaft (62).

7. A harvester according to one of the preceding claims **characterised in that** a rotary speed and/or a rotary direction of a conveyor portion (42, 44, 46) is respectively regulatable in dependence on at least one machine parameter (Pm) and/or operating parameter (Pb).

8. A harvester according to one of the preceding claims **characterised in that** there is provided at least one first drive unit (58) for driving the conveyor member (22).

9. A harvester according to one of the preceding claims **characterised in that** at least one, in particular the first, conveyor portion (42, 44, 46) and/or at least one conveyor element (48, 50, 52) are adapted to be replaceable.

## Revendications

1. Machine agricole de récolte comprenant un dispositif de ramassage (16) pour du produit agricole de récolte, le dispositif de ramassage (16) comportant au moins un tambour de ramassage entraînable (18) pour ramasser du produit de récolte et au moins un organe d'amenée entraînable (22), l'organe d'amenée (22) comportant radialement, à l'extérieur, des éléments d'amenée (48, 50, 52) pour amener le produit de récolte à un rotor d'amenée (28) et/ou à un canal de produit de récolte (26), l'organe d'amenée (22) comportant au moins deux portions d'amenée (42, 44, 46), **caractérisée en ce que** les portions d'amenée (42, 44, 46) sont conçues de façon à pouvoir être mises en rotation et entraînées indépendamment l'une de l'autre.

2. Machine de récolte selon la revendication 1, **caractérisée en ce que** les au moins deux portions d'amenée (42, 44, 46) sont disposées coaxialement les unes par rapport aux autres.

3. Machine de récolte selon la revendication 1 ou 2, **caractérisée en ce que** l'organe d'amenée (22) comporte trois portions d'amenée (42, 44, 46), une première portion d'amenée (42) étant disposée sensiblement au centre de l'organe d'amenée (22) et/ou du dispositif de ramassage (16), et une seconde et une troisième portion d'amenée (44, 46) étant disposées chacune à l'extérieur de la première portion d'amenée (42).

4. Machine de récolte selon une des revendications précédentes, **caractérisée en ce que** la première portion d'amenée (42) comporte un arbre d'entraînement monté à rotation à chaque extrémité, en particulier dans le dispositif de ramassage (16), les portions d'amenée extérieures, en particulier les deuxième et troisième, (44, 46) étant disposées à rotation sur l'arbre d'entraînement (56).

5. Machine de récolte selon une des revendications précédentes, **caractérisée en ce que** les portions d'amenée extérieures (44, 46), en particulier la deuxième et la troisième portion d'amenée (44, 46), sont entraînables à des vitesses de rotation différentes et/ou dans des sens de rotation différents.

6. Machine de récolte selon une des revendications précédentes, **caractérisée en ce que** des portions d'amenée disposées à l'extérieur (44, 46), en particulier la deuxième et la troisième portion d'amenée (44, 46), sont entraînable conjointement par l'intermédiaire d'un arbre de liaison rotatif (62).

7. Machine de récolte selon une des revendications précédentes, **caractérisée en ce qu'**une vitesse de rotation et/ou un sens de rotation d'une portion d'amenée (42, 44, 46) sont réglables chacun en fonction au moins d'un paramètre machine (Pm) et/ou d'un paramètre d'exploitation (Pb).

8. Machine de récolte selon une des revendications précédentes, **caractérisée en ce qu'**au moins une première unité d'entraînement (58) est prévue pour entraîner l'organe d'amenée (22).

9. Machine de récolte selon une des revendications précédentes, **caractérisée en ce qu'**au moins une portion d'amenée, en particulier la première, (42, 44, 46) et/ou au moins un élément d'amenée (48, 50, 52) sont conçus de manière échangeable.
